(19) Europäisches Patentamt
European Patent Office
Office européen des brevets

(11) **EP 4 468 556 A1**

(12) **EUROPEAN PATENT APPLICATION**
published in accordance with Art. 153(4) EPC

(43) Date of publication:
**27.11.2024 Bulletin 2024/48**

(21) Application number: **23856091.6**

(22) Date of filing: **18.04.2023**

(51) International Patent Classification (IPC):
**H02J 7/00** (2006.01)      **H01M 10/42** (2006.01)

(52) Cooperative Patent Classification (CPC):
**H01M 10/42; H01M 10/44; H02J 7/00;** Y02E 60/10

(86) International application number:
**PCT/CN2023/088874**

(87) International publication number:
**WO 2024/040996 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.08.2022 CN 202211014128**

(71) Applicant: **Honor Device Co., Ltd.
Shenzhen, Guangdong 518040 (CN)**

(72) Inventors:
• **CUI, Houlei
  Shenzhen, Guangdong 518040 (CN)**
• **ZHU, Hua
  Shenzhen, Guangdong 518040 (CN)**
• **LU, Lun
  Shenzhen, Guangdong 518040 (CN)**

(74) Representative: **Beder, Jens
Mitscherlich PartmbB
Patent- und Rechtsanwälte
Karlstraße 7
80333 München (DE)**

(54) **CHARGING AND DISCHARGING MANAGEMENT METHOD**

(57)    This application provides a charging and discharging management method. When the charging and discharging management method provided in embodiments of this application is implemented, an electronic device may set a lower-limit voltage of a battery to a voltage higher than a theoretical lower-limit voltage, and continuously increase the lower-limit voltage as a battery cycle passes, thereby reducing a charging/discharging volume change rate of a silicon anode as much as possible, and extending a battery life.

S101 | Determine a current quantity of cycles of a battery

S102 | When the current quantity of cycles of the battery is from 1 to $n_0$, set a lower-limit voltage to $V_{min}$, and set an upper-limit voltage to $V_{max}$

S103 | When the current quantity of cycles of the battery is from $n_0+1$ to $n_1$, increase the lower-limit voltage to $V_{min}+V_0$, and maintain the upper-limit voltage at $V_{max}$

S104 | When the current quantity of cycles of the battery is from $n_1+1$ to $n_2$, increase the lower-limit voltage to $V_{min}+V_0+V_1$, and maintain the upper-limit voltage at $V_{max}$

S105 | Sequentially increase the lower-limit voltage by analogy as the quantity of cycles increases

FIG. 2

**Description**

This application claims priority to Chinese Patent Application No. 202211014128.4, filed with the China National Intellectual Property Administration on August 23, 2022 and entitled "CHARGING AND DISCHARGING MANAGEMENT METHOD", which is incorporated herein by reference in its entirety.

**TECHNICAL FIELD**

This application relates to the terminal field, and in particular, to a charging and discharging management method.

**BACKGROUND**

A mass energy density and a volumetric energy density of a lithium-ion battery become higher based on a requirement of people on an electronic device such as a mobile phone/notebook computer for lightening and thinning and a long battery life and a requirement of people on an electronic vehicle for a long battery life. Increasing a capacity per gram of a material of a positive or negative electrode is an important measure to improve an endurance ability of the battery. Currently, a capacity per gram of a graphite material is close to a theoretical limit (372 mAh/g), but a capacity per gram of silicon (Si) (where a theoretical limit of the capacity per gram is 4200 mAh/g) is much higher than that of the graphite. In addition, the silicon has advantages in many aspects, such as moderate potential during lithiation and delithiation, abundant reserves, a low price, being environmental and non-poisonous, and a mature preparation process, and is currently considered as an ideal material for replacing the graphite as an active material of the negative electrode of the battery.

However, the silicon has a significant volume effect, and a volume change rate caused by expansion/contraction during repeated lithiation and delithiation is up to 400%. Consequently, during charging/discharging, due to particle pulverization, delamination of an electrode sheet, repeated destruction/repair of a solid electrolyte interface (solid electrolyte interface, SEI), and the like, active lithium ions are continuously consumed, and a by-product layer is formed on a surface, directly leading to a large cycle-capacity attenuation rate and thickness expansion rate of a silicon-anode battery. As a result, a cycle life of the silicon-anode battery is not ideal, and a use requirement on the electronic device is difficult to be satisfied.

**SUMMARY**

According to a first aspect, this application provides a charging and discharging management method. The method is applied to an electronic device, and the electronic device includes a battery. The method includes: setting a lower-limit voltage of the battery to a first value at a first moment, where when a voltage of the battery reaches the first value, the battery stops being discharged; and setting the lower-limit voltage of the battery to a second value at a second moment, where the second moment is later than the first moment, the second value is greater than the first value, and when the voltage of the battery reaches the second value, the battery stops being discharged.

When the method provided in the first aspect is implemented, the electronic device may gradually increase the lower-limit voltage of the battery, to suppress a volume change rate of the battery, reduce a loss rate of the battery, and extend a battery life.

When the method provided in the first aspect is implemented, in some embodiments, the first moment corresponds to a first battery cycle of the battery, the second moment corresponds to a second battery cycle of the battery, and the first battery cycle and the second battery cycle are different cycles.

When the method provided in the foregoing embodiment is implemented, the electronic device may increase the lower-limit voltage of the battery in units of a quantity of battery cycles.

When the method provided in the first aspect is implemented, in some embodiments, the second battery cycle is a next cycle of the first battery cycle.

When the method provided in the foregoing embodiment is implemented, a electronic device may increase the lower-limit voltage of the battery each time a battery cycle begins. In this way, the electronic device may more flexibly adjust the lower-limit voltage of the battery, to reduce an attenuation speed of a battery capacity, and extend a battery life.

When the method provided in the first aspect is implemented, in some embodiments, a first quantity of battery cycles exists between the second battery cycle and the first battery cycle.

Refer to an embodiment shown in Table 1. The electronic device may increase the lower-limit voltage once each time after 200 battery cycles are completed. In this way, the electronic device may increase the lower-limit voltage as the cycle passes, to reduce the attenuation speed of the battery capacity, and extend the battery life. In addition, frequent increase behaviors are avoided, to help save energy and extend service duration corresponding to one battery cycle.

When the method provided in the first aspect is implemented, in some embodiments, a voltage difference between the second value and the first value corresponds to a first proportion of a battery capacity.

When the method provided in the foregoing embodiment is implemented, each time increasing the lower-limit voltage, the electronic device may determine an increase amount of the lower-limit voltage based on a voltage difference corresponding to a fixed loss amount of the battery capacity.

When the method provided in the first aspect is implemented, in some embodiments, a capacity retention rate of the battery is a third value in the first battery cycle, and the capacity retention rate of the battery is a fourth value in the second battery cycle. The capacity retention rate is a ratio of a current total charging amount to an initial total charging amount of the battery. The third value is different from the fourth value.

When the method provided in the foregoing embodiment is implemented, the electronic device may determine, based on the current capacity retention rate of the battery, whether to increase the lower-limit voltage of the battery. Refer to an embodiment shown in Table 6. The electronic device may determine to increase the lower-limit voltage when the capacity retention rate of the battery drops from 95% to 94%. In this way, the electronic device may more flexibly adjust the lower-limit voltage of the battery based on the current capacity retention rate of the battery.

When the method provided in the first aspect is implemented, in some embodiments, a first voltage value is preset for the battery. The first voltage value is a minimum value of the lower-limit voltage of the battery, and the first value is greater than or equal to the first voltage value.

When the method provided in the foregoing embodiment is implemented, when beginning to use the battery, the electronic device may set the lower-limit voltage to a minimum value higher than a theoretical lower-limit voltage, to prevent, at the beginning, the battery from being fully discharged, thereby reducing the volume change rate of the battery, and delaying the loss rate of the battery.

When the method provided in the first aspect is implemented, in some embodiments, a second voltage value is preset for the battery. The second voltage value is a maximum value of the lower-limit voltage of the battery, and the second value is less than or equal to the second voltage value.

When the method provided in the foregoing embodiment is implemented, the electronic device does not excessively increase the lower-limit voltage when increasing the lower-limit voltage. When the lower-limit voltage reaches the first voltage value, the electronic device no longer increases the lower-limit voltage. In this way, problem of an excessively low actual available capacity of the battery and a short battery life that are generated because the lower-limit voltage is increased do not occur in the battery, to help improve use experience of a user.

When the method provided in the first aspect is implemented, in some embodiments, a material of a negative electrode of the battery includes one or more of the following: carbon, silicon, tin, and germanium. When the method provided in the foregoing embodiment is implemented, when the material of the negative electrode of the battery includes any one or more of the carbon, silicon, tin, and germanium, the electronic device can obviously suppress the volume change rate of the battery, thereby delaying the loss rate of the battery, and improving a cycle life of the battery.

According to a second aspect, this application provides a charging and discharging management method. The method is applied to an electronic device, and the electronic device includes a battery. The method includes: setting a lower-limit voltage of the battery to a fifth value at a third moment, where when a voltage of the battery reaches the fifth value, the battery stops being discharged; and setting the lower-limit voltage of the battery to a sixth value at a fourth moment, where the fourth moment is later than the third moment, the sixth value is less than the fifth value, and when the voltage of the battery reaches the sixth value, the battery stops being discharged.

When the method provided in the second aspect is implemented, the electronic device may gradually decrease the lower-limit voltage of the battery, so that the battery can maintain an initial discharging amount during one time of discharging as a battery capacity attenuates, thereby alleviating a feeling of a user on attenuation of the battery capacity and improving use experience of the user.

When the method provided in the second aspect is implemented, in some embodiments, the third moment corresponds to a third battery cycle of the battery, the fourth moment corresponds to a fourth battery cycle of the battery, and the third battery cycle and the fourth battery cycle are different cycles.

When the method provided in the foregoing embodiment is implemented, the electronic device may decrease the lower-limit voltage of the battery in units of a quantity of battery cycles.

When the method provided in the second aspect is implemented, in some embodiments, the fourth battery cycle is a next cycle of the third battery cycle.

When the method provided in the foregoing embodiment is implemented, the electronic device may decrease the lower-limit voltage of the battery each time a battery cycle begins. In this way, the electronic device may more flexibly adjust the lower-limit voltage of the battery, to reduce an attenuation speed of a battery capacity, and extend a battery life.

When the method provided in the second aspect is implemented, in some embodiments, a first quantity of battery cycles exists between the fourth battery cycle and the third battery cycle.

Refer to an embodiment shown in Table 8. The electronic device may decrease the lower-limit voltage once each time after 200 battery cycles are completed. In this way, the electronic device may decrease the lower-limit voltage as the cycle passes, to reduce the attenuation speed of the battery capacity, and extend the battery life. In addition, frequent decrease behaviors are avoided, to help save energy and extend service duration corresponding to one battery cycle.

When the method provided in the second aspect is implemented, in some embodiments, a voltage difference between the sixth value and the fifth value corresponds to a first proportion of a battery capacity.

When the method provided in the foregoing embodiment is implemented, each time decreasing the lower-limit voltage, the electronic device may determine a decrease amount of the lower-limit voltage based on a voltage difference corresponding to a fixed loss amount of the battery capacity.

When the method provided in the second aspect is implemented, in some embodiments, a capacity retention rate of the battery is a seventh value in the third battery cycle, and the capacity retention rate of the battery is an eighth value in the fourth battery cycle. The capacity retention rate is a ratio of a current total charging amount to an initial total charging amount of the battery. The seventh value is different from the eighth value.

When the method provided in the foregoing embodiment is implemented, the electronic device may determine, based on a current capacity retention rate of the battery, whether to decrease the lower-limit voltage of the battery. For example, the electronic device may determine to decrease the lower-limit voltage when the capacity retention rate of the battery drops from 95% to 94%. In this way, the electronic device may more flexibly adjust the lower-limit voltage of the battery based on the current capacity retention rate of the battery.

When the method provided in the second aspect is implemented, in some embodiments, a first voltage value is preset for the battery. The first voltage value is a minimum value of the lower-limit voltage of the battery, and the sixth value is greater than or equal to the first voltage value.

The electronic device does not excessively decrease the lower-limit voltage when decreasing the lower-limit voltage. When the lower-limit voltage reaches the first voltage value, the electronic device no longer decreases the lower-limit voltage, to avoid affecting normal work of the battery.

When the method provided in the second aspect is implemented, in some embodiments, a second voltage value is preset for the battery. The second voltage value is a maximum value of the lower-limit voltage of the battery. The fifth value is less than or equal to the second voltage value.

When the method provided in the foregoing embodiment is implemented, the electronic device does not set the lower-limit voltage of the battery to an excessively high voltage, to avoid severely depressing the battery capacity at the beginning, reducing a battery life in one battery cycle periodicity, and affecting use experience of a user.

When the method provided in the second aspect is implemented, in some embodiments, a material of a negative electrode of the battery includes one or more of the following: carbon, silicon, tin, and germanium. When the method provided in the foregoing embodiment is implemented, when the material of the negative electrode of the battery includes any one or more of the carbon, silicon, tin, and germanium, the electronic device can obviously suppress the volume change rate of the battery, thereby delaying the loss rate of the battery, and improving a cycle life of the battery.

According to a third aspect, this application provides an electronic device. The electronic device includes one or more processors and one or more memories. The one or more memories are coupled to the one or more processors. The one or more memories are configured to store computer program code, and the computer program code includes computer instructions. When the one or more processors execute the computer instructions, the electronic device is enabled to perform the method in any one of the first aspect and the possible implementations of the first aspect, or perform the method in any one of the second aspect and the possible implementations of the second aspect.

According to a fourth aspect, an embodiment of this application provides a chip system. The chip system is applied to an electronic device. The chip system includes one or more processors. The processor is configured to invoke computer instructions to enable the electronic device to perform the method in any one of the first aspect and the possible implementations of the first aspect, or perform the method in any one of the second aspect and the possible implementations of the second aspect.

According to a fifth aspect, this application provides a computer-readable storage medium including instructions. When the instructions are run on an electronic device, the electronic device is enabled to perform the method in any one of the first aspect and the possible implementations of the first aspect, or perform the method in any one of the second aspect and the possible implementations of the second aspect.

According to a sixth aspect, this application provides a computer program product including instructions. When the computer program product runs on an electronic device, the electronic device is enabled to perform the method in any one of the first aspect and the possible implementations of the first aspect, or perform the method in any one of the second aspect and the possible implementations of the second aspect.

It may be understood that, the electronic device provided in the third aspect, the chip system provided in the fourth aspect, the computer storage medium provided in the fifth aspect, and the computer program product provided in the sixth aspect are all configured to perform the method provided in this application. Therefore, for beneficial effects that can be achieved therein, refer to the beneficial effects in the corresponding method, and details are not described herein again.

**BRIEF DESCRIPTION OF DRAWINGS**

FIG. 1 is a schematic diagram of a relationship between a state of charge and a thickness that are of a silicon-anode battery according to an embodiment of this application;

FIG. 2 is a flowchart of a charging and discharging management method for extending a battery life according to an embodiment of this application;

FIG. 3A and FIG. 3B are schematic diagrams of an effect of extending a battery life according to an embodiment of this application;

FIG. 4 is a schematic diagram of an effect that is of extending a battery life and that corresponds to another charging and discharging management method according to an embodiment of this application; and

FIG. 5 is a schematic diagram of a structure of an electronic device 10 according to an embodiment of this application.

**DESCRIPTION OF EMBODIMENTS**

Terms used in the following embodiments of this application are merely intended to describe specific embodiments, but are not intended to limit this application.

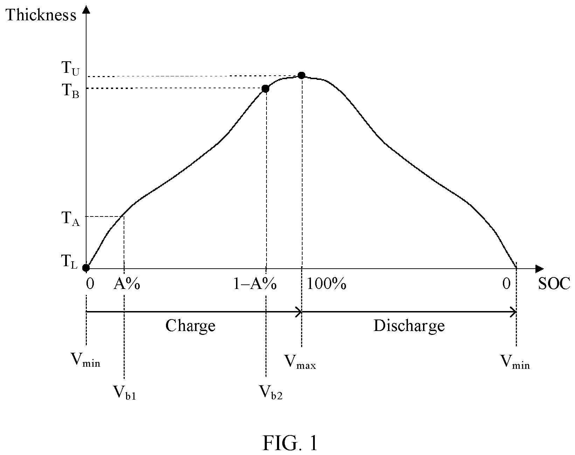

FIG. 1 is a schematic diagram of a relationship between a state of charge and a thickness that are of a silicon-anode battery (a battery with a graphite-silicon doped anode) according to an embodiment of this application.

As shown in FIG. 1, an abscissa is a state of charge (State of charge, SOC) of a silicon-anode battery. SOC=0 indicates that the battery is uncharged. SOC=100% indicates that the battery is fully charged. A process from SOC=0 to SOC=100% is a charging process. A process from SOC=100% to SOC=0 is a discharging process.

An ordinate is a thickness of the silicon-anode battery. When SOC=0, the thickness of the silicon-anode battery is denoted as $T_L$. $T_L \neq 0$. When SOC=A% (A% is a state of charge that a charging amount is slightly greater than 0), the thickness of the battery is denoted as $T_A$. When SOC=1-A% (1-A% is a state of charge that the charging amount is slightly less than 100%), the thickness of the battery is denoted as $T_B$. When SOC=100%, the thickness of the battery is denoted as Tu.

In the charging process, the thickness of the battery increases as the charging amount increases, that is, the battery expands. Correspondingly, in the discharging process, the thickness of the battery decreases as the charging amount decreases, that is, the battery contracts. A thickness change of the battery in the charging and discharging process is usually due to a thickness change of a negative electrode sheet. In this case, during repeated lithiation and delithiation, a volume change rate caused by expansion/contraction of the negative electrode is extremely high, directly leading to particle pulverization of the negative electrode, delamination of the electrode sheet, and repeated destruction/repair of an SEI. Consequently, a cycle life of the silicon-anode battery is severely affected.

SOC=0 is an extreme value that the battery can reach in a proper discharging process, and SOC=0 corresponds to a battery voltage of $V_{min}$. $V_{min}$ may be referred to as a theoretical lower-limit voltage. In the proper discharging process, the battery voltage is not lower than the theoretical lower-limit voltage. SOC=100% is an extreme value that the battery can reach in a proper charging process, and SOC=100% corresponds to a battery voltage of $V_{max}$. $V_{max}$ may be referred to as a theoretical upper-limit voltage. Correspondingly, in the proper charging process, the battery voltage is not higher than the theoretical upper-limit voltage. In other words, $V_{min}$ to $V_{max}$ is a proper usable voltage window for the battery.

As shown in FIG. 1, in an actual charging and discharging process, if a lower-limit voltage is set to $V_{min}$ (the theoretical lower-limit voltage), and an upper-limit voltage is set to $V_{max}$ (the theoretical upper-limit voltage), that is, the battery is fully charged and fully discharged, after charging/discharging is completed, a thickness change rate of the battery is K1:

$$K1=(T_U-T_L)/T_L$$

If the lower-limit voltage is set to $V_{min}$, and the upper-limit voltage is set to $V_{b2}$ (SOC=1-A%), that is, the battery is not fully charged (the upper-limit voltage is limited), after charging/discharging is completed, the thickness change rate of the battery is K2:

$$K2=(T_B-T_L)/T_L$$

If the lower-limit voltage is set to $V_{b1}$ (SOC=A%), and the upper-limit voltage is set to $V_{max}$, that is, the battery is not fully discharged (the lower-limit voltage is limited), after charging/discharging is completed, the thickness change rate of the battery is K3:

$$K3=(T_U-T_A)/T_A$$

From a change trend of an SOC curve shown in FIG. 1, it can be learned that:

$$K1>K2>K3$$

In other words, under a charging and discharging management policy of fully charging and fully discharging, a charging/discharging volume change rate of the battery is highest, followed by limiting the upper-limit voltage (sacrificing A% of the capacity). A charging/discharging volume change rate under a charging and discharging management policy of limiting the lower-limit voltage (also sacrificing A% of the capacity) is lowest.

A higher charging/discharging volume change rate of the silicon-anode battery indicates a larger loss to the negative electrode and a shorter cycle life (including a capacity life and an expansion life) of the battery. In view of this, this application provides a charging and discharging management method. When the charging and discharging management method provided in embodiments of this application is implemented, an electronic device 10 may set the lower-limit voltage of the battery to a voltage higher than the theoretical lower-limit voltage, and continuously increase the lower-limit voltage as a battery cycle passes, thereby reducing the charging/discharging volume change rate of the silicon anode as much as possible, and extending a battery life.

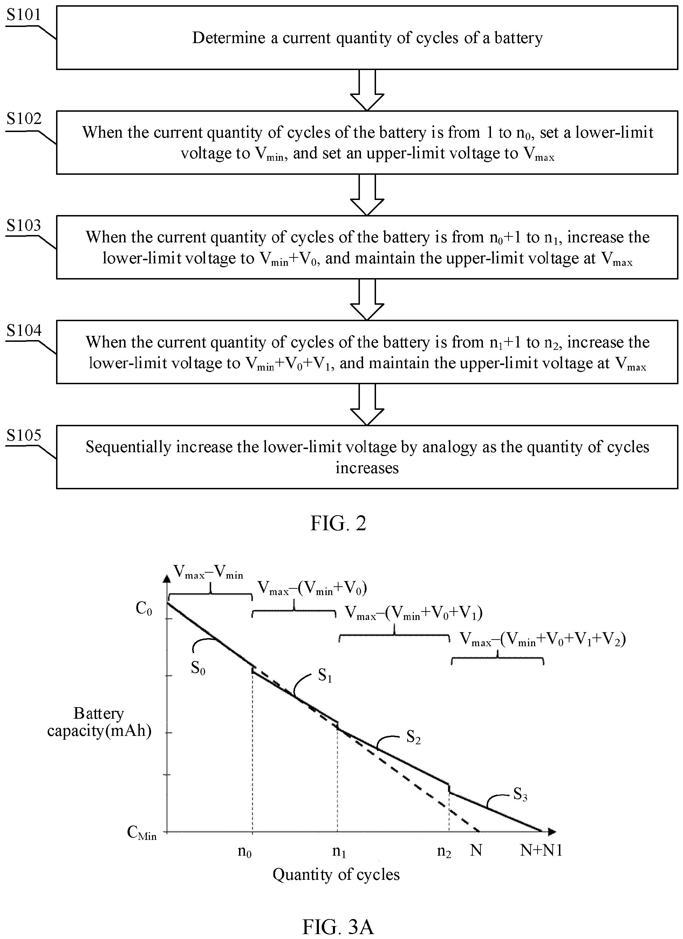

FIG. 2 is a flowchart of a charging and discharging management method for extending a battery life according to an embodiment of this application.

S101: Determine a current quantity of cycles of a battery.

When the battery is fully charged initially, a charging amount of the battery is 100%. When the battery supplies power to an external circuit, a battery voltage gradually decreases. Refer to an SOC curve of a discharging segment shown in FIG. 1.

After power is completely consumed, the battery stops supplying power to the external circuit. From a user perspective, in this case, the charging amount of the battery is 0. In this case, the battery is connected to a charging circuit and the external circuit operates on the battery. The battery voltage gradually increases until a charging amount of a negative electrode is saturated. Refer to an SOC curve of a charging segment shown in FIG. 1. From the user perspective, in this case, the charging amount of the battery is 100%.

The foregoing process in which the battery is discharged once and charged once, that is, the process in which the charging amount of the battery changes from 100% to 0 and to 100% again shown in FIG. 1, may be referred to as one battery cycle. An entire life period of the battery includes a plurality of battery cycles. More performed battery cycles indicate a shorter remaining life of the battery. In some embodiments, one battery cycle may alternatively indicate a process in which the battery is fully charged once only or a process in which the battery is fully discharged once only.

In this embodiment of this application, when beginning a new battery cycle, an electronic device 10 may dynamically adjust an upper-limit voltage and a lower-limit voltage of the battery based on a quantity of performed battery cycles, thereby avoiding an excessive volume change rate of the battery, to reduce a loss to the battery.

The electronic device 10 may set, based on factors such as the quantity of performed battery cycles and a current actual capacity of the battery, a cycle interval at which the lower-limit voltage is adjusted.

The electronic device 10 may set a quantity of cycles that is 1 to $n_0$ as a first cycle interval, a quantity of cycles that is $n_0+1$ to $n_1$ as a second cycle interval, a quantity of cycles that is $n_1+1$ to $n_2$ as a third cycle interval, and so on. The electronic device 10 may set M cycle intervals. Quantities of battery cycles at different intervals may be the same or different based on different bases for dividing the cycle intervals.

When the electronic device 10 begins the new battery cycle, the electronic device 10 may determine the current quantity of cycles.

S102: When the current quantity of cycles of the battery is from 1 to $n_0$ (the first cycle interval), the electronic device 10 sets the lower-limit voltage to $V_{min}$ (a theoretical lower-limit voltage) and sets the upper-limit voltage to $V_{max}$ (a theoretical upper-limit voltage). Optionally, at the first cycle interval, the electronic device 10 may alternatively set the lower-limit voltage to $V_x$, where $V_x$ is higher than $V_{min}$, to reduce the loss to the battery and extend a cycle life of the battery. The theoretical lower-limit voltage is also referred to as a first voltage value.

As the quantity of cycles increases, S103 is performed: When the current quantity of cycles of the battery is from $n_0+1$ to $n_1$ (the second cycle interval), the electronic device 10 increases the lower-limit voltage to $V_{min}+V_0$, and maintains the upper-limit voltage at $V_{max}$. In this case, a volume change rate of the battery at the second cycle interval is reduced in comparison with that at the first cycle interval, thereby reducing an attenuation speed of a battery capacity and an expansion speed of a battery thickness, and extending a cycle life of the battery.

S104: When the current quantity of cycles of the battery is from $n_1+1$ to $n_2$ (the third cycle interval), the electronic device 10 increases the lower-limit voltage to $V_{min}+V_0+V_1$, and maintains the upper-limit voltage at $V_{max}$. S105: The electronic device 10 sequentially increases the lower-limit voltage by analogy as the quantity of cycles increases. In this way, on a basis of maintaining the battery capacity and preventing the battery capacity from being excessively low, the electronic device 10 may gradually reduce the attenuation speed of the battery capacity and the expansion speed of the battery thickness, to extend a cycle life of the battery, thereby extending service duration for a user and improving use experience of the user.

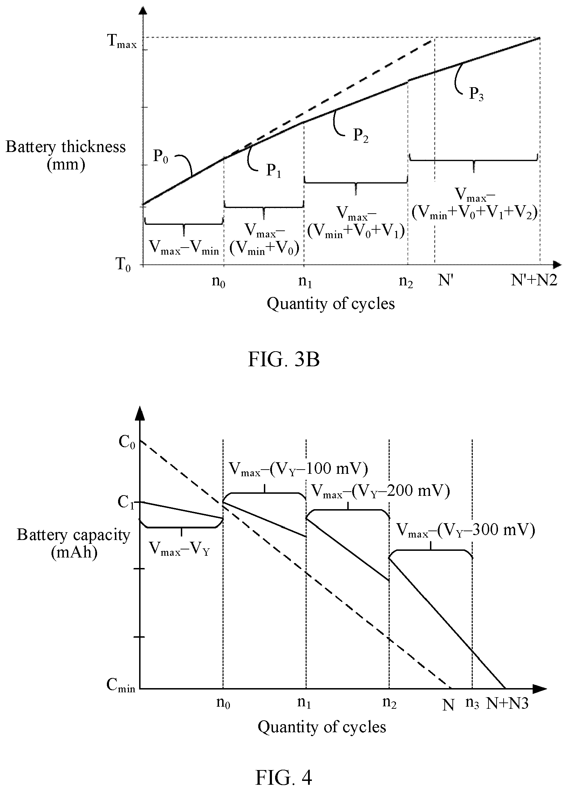

FIG. 3A and FIG. 3B are schematic diagrams of an effect of extending a battery life according to an embodiment of this application.

A criterion for the battery life is that a battery capacity reaches a lowest value $C_{min}$ for maintaining normal work of a battery, or thickness expansion of the battery reaches a maximum value $T_{max}$ for maintaining normal work of the battery.

A higher charging/discharging volume change rate of a silicon-anode battery indicates a larger loss to the battery, that is, a faster attenuation speed of the battery capacity. As shown in FIG. 1, a lower lower-limit voltage of the silicon-anode battery indicates a higher charging/discharging volume change rate. As the quantity of battery cycles increases, the lower-limit voltage of the battery gradually increases, and the charging/discharging volume change rate gradually decreases. The attenuation speed of the corresponding battery capacity gradually decreases.

As shown in FIG. 3A, $C_0$ represents an initial battery capacity, $C_{min}$ represents the lowest value of the capacity for maintaining normal work of the battery, and a slope represents the attenuation speed of the battery capacity. At the first cycle interval (from 1 to $n_0$), the lower-limit voltage of the battery is the lowest and the charging/discharging volume change rate is the highest. Therefore, the attenuation speed of the battery capacity is the fastest, being $S_0$. If the charging and discharging management method provided in this embodiment of this application is not performed, the attenuation speed of the battery capacity remains $S_0$. In this case, a change of the battery capacity with the battery cycle is represented by a dashed line shown in FIG. 3A. A total quantity of battery cycles of the battery is N.

If the charging and discharging management method provided in this embodiment of this application is performed, after the battery cycle reaches an interval endpoint value such as $n_0$, $n_1$, and $n_2$, the electronic device 10 may gradually increase the lower-limit voltage of the battery, to reduce the charging/discharging volume change rate, thereby gradually reducing the attenuation speed of the battery capacity, such as $S_0$, $S_1$, and $S_2$. In this case, the change of the battery capacity with the battery cycle is represented by a solid line shown in FIG. 3A. The total quantity of cycles of the battery is increased to N+N1, so that a cycle life of the battery is extended.

As shown in FIG. 3B, $T_0$ represents an initial battery thickness, $T_{max}$ represents a maximum value of a thickness that is of a battery core and that is for maintaining normal work of the battery, and a slope represents the charging/discharging volume change rate of the battery. As shown in FIG. 1, a lower lower-limit voltage of the battery indicates a larger charging/discharging volume change rate. At the first cycle interval (from 1 to $n_0$), the lower-limit voltage of the battery is the lowest, and the charging/discharging volume change rate is the highest, being $P_0$. In this case, if the charging and discharging management method provided in this embodiment of this application is not performed, the charging/discharging volume change rate of the battery remains $P_0$. In this case, a change of the battery thickness with the battery cycle is represented by a dashed line shown in FIG. 3B. A total quantity of battery cycles of the battery is N'.

If the method of gradually increasing the lower-limit voltage of the battery provided in this embodiment of this application is performed, the charging/discharging volume change rate of the battery is gradually reduced, such as $P_1$, $P_2$, and $P_3$. In this case, the change of the battery thickness with the battery cycle is represented by a solid line shown in FIG. 3B. The total quantity of battery cycles of the battery is N'+N2, so that a cycle expansion life of the battery is extended.

In some embodiments, the electronic device 10 may set different cycle intervals of the lower-limit voltage based on a quantity of performed battery cycles. Specifically, the electronic device 10 may set each cycle interval based on a fixed quantity of cycles. For example, the electronic device 10 may designate that 200 consecutive battery cycles is one cycle interval. For example, Table 1 shows an adjustment rule for the cycle interval and the lower-limit voltage.

**Table 1**

|  | First cycle interval | Second cycle interval | Third cycle interval | Fourth cycle interval |
|---|---|---|---|---|
| Quantity of cycles | 1 to 200 | 201 to 400 | 401 to 600 | >600 |
| Lower-limit voltage | $V_{min}$ | $V_{min}$+100 mV | $V_{min}$+200 mV | $V_{min}$+300 mV |

The battery life is limited, and therefore the cycle interval is also limited. In addition, an increase in the lower-limit voltage causes a decrease in the battery capacity. If the lower-limit voltage is set to an excessively high voltage, the battery capacity is excessively low, and an endurance ability of the battery is poor. As a result, the battery needs to be charged frequently and is inconvenient for using by a user. Therefore, after the quantity of performed battery cycles reaches a quantity, subsequent cycles may be designated as one cycle interval, and the lower-limit voltage of the battery is no longer increased. For example, a 601st cycle and a cycle thereafter may be designated as one cycle interval. Beginning from the 601st cycle, the lower-limit voltages of the battery are all $V_{min}$+300 mV, and the electronic device 10 no longer increases the lower-limit voltage of the battery.

After determining the cycle interval, the electronic device 10 may determine the lower-limit voltage of the battery cycle based on the cycle interval at which a current quantity of cycles is located. For example, when a 1st battery cycle begins, the electronic device 10 may set the lower-limit voltage of the battery to $V_{min}$, where for example, $V_{min}$=3.0 V, and set the upper-limit voltage to $V_{max}$, where for example, $V_{max}$=4.45 V. In a discharging process of the battery, the voltage gradually decreases to $V_{min}$. Then, in a charging process of the battery, the voltage restores to $V_{max}$. Thereafter, in each of a 2nd battery cycle, a 3rd battery cycle, ..., a 200th battery cycle, the battery is charged and discharged based on $V_{min}$=3.0 V and $V_{max}$=4.45 V.

When the battery begins a 201st battery cycle, the electronic device 10 may increase the lower-limit voltage of the battery. For example, the electronic device 10 may increase the lower-limit voltage of the battery to 3.1 V ($V_0$=100 mV). The electronic device 10 may maintain the upper-limit voltage unchanged. In the discharging process of the battery, when the voltage of the battery decreases to 3.1 V, the battery is no longer discharged. Then, the battery may enter the charging process. In the charging process, the voltage of the battery restores to 4.45 V. Thereafter, the battery enters a 202nd battery cycle and begins to be discharged. In each of a 201st battery cycle, a 202nd battery cycle, ..., a 400th battery cycle, the battery is charged and discharged based on $V_{min}$+$V_0$=3.1 V and $V_{max}$=4.45 V.

When the battery begins a 401st battery cycle, the electronic device 10 continues to increase the lower-limit voltage. For example, the electronic device 10 may increase the lower-limit voltage of the battery to 3.2 V ($V_i$=100 mV), and maintain the upper-limit voltage unchanged. During discharging of the battery, when the voltage of the battery decreases to 3.2 V, the battery stops being discharged. Then, the battery may enter the charging process. In the charging process, the voltage of the battery restores to 4.45 V. Thereafter, the battery enters a 402nd battery cycle and begins to be discharged. In each of a 401st battery cycle, a 402nd battery cycle, ..., a 600th battery cycle, the battery is charged and discharged based on $V_{min}$+$V_0$+$V_1$=3.2 V and $V_{max}$=4.45 V.

In the foregoing embodiment, the electronic device 10 sets the lower-limit voltage of the battery to $V_{min}$ (3.0 V). A moment at which the upper-limit voltage is set to $V_{max}$ may be referred to as a first moment, and a moment at which the electronic device 10 increases the lower-limit voltage of the battery to 3.1 V may be referred to as a second moment. The electronic device 10 may set the lower-limit voltage at any moment before a discharging end moment in one cycle. The lower-limit voltage 3.0 V corresponding to the first moment may be referred to as a first value, and the lower-limit voltage 3.1 V corresponding to the second moment is a second value. The 1st battery cycle corresponding to the first moment may be referred to as a first battery cycle, and the 201st battery cycle corresponding to the second moment may be referred to as a second battery cycle. 200 battery cycles exist between the second battery cycle and the first battery cycle. The 200 battery cycles are a first quantity of battery cycles.

It may be understood that the moment at which the electronic device 10 sets the lower-limit voltage of the battery to 3.1 V may be referred to as the first moment, and a moment at which the electronic device 10 increases the lower-limit voltage of the battery to 3.2 V may be referred to as the second moment. In this case, the lower-limit voltage 3.1 V corresponding to the first moment may be referred to as the first value, and the lower-limit voltage 3.2 V corresponding to the second moment is the second value. The 1st battery cycle corresponding to the first moment may be referred to as a first battery cycle, and the 201st battery cycle corresponding to the second moment may be referred to as a second battery cycle.

It can be learned from FIG. 3A that, when the lower-limit voltage is increased earlier, the attenuation speed of the battery capacity may be reduced earlier, thereby improving a cycle life of the battery as much as possible. Therefore, optionally, the electronic device 10 may alternatively increase the lower-limit voltage after each battery cycle, thereby reducing the attenuation speed of the battery capacity in a more real-time manner and extending a battery life. Refer to Table 2.

**Table 2**

| Quantity of cycles | Lower-limit voltage |
|---|---|
| 1 | $V_{min}$ |
| 2 | $V_{min}$+1*0.3 mV |
| 3 | $V_{min}$+2*0.3 mV |
| 4 | $V_{min}$+3*0.3 mV |
| 5 | $V_{min}$+4*0.3 mV |
| 6 | $V_{min}$+5*0.3 mV |
| ... | ... |
| i | $V_{min}$+(i-1)*0.3 mV |

As shown in Table 2, the voltage is increased once after one battery cycle. In this case, an increase amount in one time of increasing cannot be excessively high. Otherwise, the lower-limit voltage of the battery is high after several or dozens of battery cycles. In this case, an excessively fast speed of increasing the voltage corresponds to rapid reduction in the battery capacity. Although a battery life is theoretically extended, for a user, user experience may not be as good as that of a natural loss caused by a volume effect.

Therefore, when the adjustment policy shown in Table 2 is implemented, the increase amount that is of the lower-limit voltage and that corresponds to one battery cycle is much less than the increase amount at one cycle interval shown in Table 1. Preferably, the increase amount that is of the lower-limit voltage and that corresponds to one battery cycle may be 1*0.3 mV.

Similarly, the increase in the lower-limit voltage causes the decrease in the battery capacity. Therefore, the lower-limit voltage cannot be limitlessly increased, to ensure a power supply capability of the battery, and prevent the user experience from being affected by an excessively small battery capacity (insufficient endurance and a need for frequent charging). Therefore, the electronic device 10 may further set a highest value of the lower-limit voltage. When the increase amount of the lower-limit voltage reaches the highest value, the electronic device 10 may stop increasing the lower-limit voltage. For example, the highest value may be 3.5 V (where $V_{min}$=3.0 V). When (i-1)*0.3 mV>0.5 V, the electronic device 10 may stop increasing the lower-limit voltage.

In the foregoing embodiment, a $k^{th}$ battery cycle may be referred to as the first battery cycle, where $1 \leq k \leq i$, and a $(k+1)^{th}$ battery cycle may be referred to as the second battery cycle. After the $k^{th}$ battery cycle begins, a moment at which the electronic device sets the lower-limit voltage to $V_{min}$+(k-1)*0.3 mV may be referred to as the first moment. After the $(k+1)^{th}$ battery cycle begins, a moment at which the electronic device sets the lower-limit voltage to $V_{min}$+k*0.3 mV may be referred to as the second moment. $V_{min}$+(k-1)*0.3 mV is the first value, and $V_{min}$+k*0.3 mV is the second value. The highest value of the lower-limit voltage (3.5 V) may be referred to as a second voltage value.

In the example shown in Table 1, an increment in the lower-limit voltage between every two adjacent cycle intervals is the same. For example, $V_0$=$V_1$=100 mV Optionally, the increment in the lower-limit voltage may alternatively be different. Refer to Table 3.

**Table 3**

|  | First cycle interval | Second cycle interval | Third cycle interval | Fourth cycle interval |
|---|---|---|---|---|
| Quantity of cycles | 1 to 200 | 201 to 400 | 401 to 600 | >600 |
| Lower-limit voltage | $V_{min}$ | $V_{min}$+200 mV | $V_{min}$+300 mV | $V_{min}$+350 mV |

As shown in Table 3, $V_0$=200 mV, and Vi=100 mV It can be learned from charging and discharging curves shown in FIG. 1 that, when the lower-limit voltage is closer to the theoretical lower-limit voltage, the charging/discharging volume change rate of the battery is larger. Therefore, when increasing the lower-limit voltage for the first time, the electronic device 10 may first set a large increase amount, and then sequentially decrease the increase amount. In this way, the electronic device 10 may further delay the attenuation speed of the battery capacity, and extend a cycle life of the battery.

Further, when the 1st battery cycle begins, the electronic device 10 may further set the lower-limit voltage to a voltage higher than the theoretical lower-limit voltage, that is, $V_x \neq V_{min}$. Refer to Table 4.

**Table 4**

|  | First cycle interval | Second cycle interval | Third cycle interval | Fourth cycle interval |
|---|---|---|---|---|
| Quantity of cycles | 1 to 200 | 201 to 400 | 401 to 600 | >600 |
| Lower-limit voltage | $V_x$ | $V_x$+100 mV | $V_x$+200 mV | $V_x$+300 mV |

$V_x$>$V_{min}$. For example, when $V_{min}$=3.0 V, $V_x$ may be 3.1 V. In this way, the battery is not fully charged and fully discharged from the 1st battery cycle, thereby avoiding a high volume change rate in a process in which the voltage is decreased to the theoretical lower-limit voltage, and further improving a cycle life of the battery.

In the example shown in Table 1, an increment in the lower-limit voltage between every two adjacent cycle intervals is the same. For example, $V_0$=$V_1$=100 mV Optionally, the increment in the lower-limit voltage may alternatively be different, but an increment in a capacity loss is maintained the same, and a corresponding voltage is determined based on the capacity loss. Refer to Table 5.

**Table 5**

| | First cycle interval | Second cycle interval | Third cycle interval | Fourth cycle interval |
|---|---|---|---|---|
| Quantity of cycles | 1 to 200 | 201 to 400 | 401 to 600 | >600 |
| Capacity loss | 0 | 1% | 2% | 3% |
| Lower-limit voltage | $V_{min}$ | $V_{min}$+V(1% loss) | $V_{min}$+V(2% loss) | $V_{min}$+V(3% loss) |

As shown in Table 5, at the first cycle interval (the 1st battery cycle to the 200th battery cycle), the electronic device 10 may set the lower-limit voltage of the battery to $V_{min}$. In the second cycle interval (the 201st to 400th battery cycle), a capacity loss of 1% is set to increase the lower voltage limit, and the voltage is $V_{min}$+V(1% loss). V(1% loss) refers to a voltage corresponding to a battery capacity of 1%. A relationship between the battery capacity and the voltage is nonlinear. Each time the lower voltage limit is adjusted upward, an increment of the lower voltage limit corresponding to the capacity of 1% is different. A specific value may be determined based on a voltage-capacity SOC relationship in the initial charging and discharging curve. By analogy, the electronic device 10 may determine the lower-limit voltages corresponding to the third and fourth cycle intervals after entering the third and fourth cycle intervals, thereby gradually reducing the charging/discharging volume change rate and extending a cycle life of the battery.

In this embodiment of this application, when the first value is $V_{min}$ and the second value is $V_{min}$+V(1% loss), a voltage difference between the first value and the second value, that is, V(1% loss), may be referred to as a voltage corresponding to a first proportion of the battery capacity.

As the charging and discharging process of the battery progresses, the battery capacity gradually decreases. Therefore, in some other embodiments, the electronic device 10 may monitor a current actual capacity of the battery in real time and set, based on the current actual capacity, the cycle interval for adjusting the lower-limit voltage. For example, the electronic device 10 may set a new cycle interval for every 5% decrement in the battery capacity. For example, Table 6 shows another adjustment rule for the cycle interval and the lower-limit voltage.

**Table 6**

| | First cycle interval | Second cycle interval | Third cycle interval | Fourth cycle interval |
|---|---|---|---|---|
| Capacity retention rate | 100% to 95% | 95% to 90% | 90% to 85% | <85% |
| Lower-limit voltage | $V_{min}$ | $V_{min}$+100 mV | $V_{min}$+200 mV | $V_{min}$+300 mV |

The capacity retention rate refers to a ratio of a current battery capacity to an initial battery capacity. As shown in Table 3, the capacity retention rate of 100% to 95% may be designated as the first cycle interval, the capacity retention rate of 95% to 90% (excluding 95%) may be designated as the second cycle interval, and the like. When the capacity retention rate is less than 95%, the electronic device 10 may increase the lower-limit voltage by 100 mV, to reduce the charging/discharging volume change rate of the battery, and reduce the attenuation speed of the battery capacity. The electronic device 10 may increase the lower-limit voltage of the battery based on the actual battery capacity by analogy, thereby extending a cycle life of the battery. Similarly, in consideration of use experience of a user, when the capacity retention rate is reduced to a preset value, the electronic device 10 no longer increases the lower-limit voltage. For example, when the capacity retention rate is less than 85%, the lower-limit voltage of the battery is maintained at $V_{min}$+300 mV.

Similarly, in the method of adjusting the lower-limit voltage based on the previous actual capacity shown in Table 6, the electronic device 10 may set the lower-limit voltage at the first cycle interval to a voltage higher than $V_{min}$, and/or the electronic device 10 may adjust the lower-limit voltage more frequently with reference to the method shown in Table 2, and/or the electronic device 10 may gradually reduce the increase amount of the lower-limit voltage with reference to the method shown in Table 3.

When the foregoing charging and discharging management method is implemented, the electronic device 10 may adjust the lower-limit voltage of the battery as the battery cycle passes, to control the charging/discharging volume change rate of the battery, thereby reducing a loss of the silicon anode and extending a battery life.

In the foregoing embodiment, when the third value is any value from 100% to 95% and the fourth value is any value from 100% to 95% and the fourth value is any value from 95% to 90%, the first value is $V_{min}$ and the second value is $V_{min}$+100 mV. When the third value is any value from 95% to 90% and the fourth value is any value from 90% to 85%, the first value is $V_{min}$+100 mV and the second value is $V_{min}$+200 mV.

In some embodiments, the electronic device 10 may alternatively adjust the upper-limit voltage of the battery simultaneously. Refer to Table 7.

**Table 7**

|  | First cycle interval | Second cycle interval | Third cycle interval | Fourth cycle interval |
|---|---|---|---|---|
| Quantity of cycles | 1 to 200 | 201 to 400 | 401 to 600 | >600 |
| Lower-limit voltage | $V_{min}$ | $V_{min}$+100 mV | $V_{min}$+200 mV | $V_{min}$+300 mV |
| Upper-limit voltage | $V_{max}$ | $V_{max}$-100 mV | $V_{max}$-200 mV | $V_{max}$-300 mV |

As shown in Table 7, the electronic device 10 may gradually reduce the upper-limit voltage of the battery as the battery cycle passes. In this way, the volume change rate of the battery may be further reduced, thereby reducing irreversible damage to the silicon anode caused by volume expansion/contraction during charging/discharging and extending a cycle life of the battery.

For an adjustment amount and an adjustment periodicity that are of a decrease amount of the upper-limit voltage, refer to the specific rule of the increase amount of the lower-limit voltage, and details are not described herein. The electronic device 10 may adjust the upper-limit voltage and the lower-limit voltage synchronously.

Refer to a battery thickness-SOC curve shown in FIG. 1. A thickness change of the silicon-anode battery caused by a same charging amount in a low-voltage area is higher than that in a high-voltage area. In other words, on a basis of a same capacity loss, decreasing the upper-limit voltage is not as effective as increasing the lower-limit voltage for an effect of suppressing expansion/contraction of a silicon material. Therefore, optionally, a frequency at which the electronic device 10 adjusts the upper-limit voltage may be lower than a frequency at which the electronic device 10 adjusts the lower-limit voltage. For example, increasing the lower-limit voltage twice corresponds to adjusting the upper-limit voltage once. Optionally, a voltage amount by which the electronic device 10 decreases the upper-limit voltage once may be lower than a voltage amount by which the electronic device 10 increases the lower-limit voltage once.

In some embodiments, an electronic device 10 may alternatively first set a lower-limit voltage to a voltage higher than the theoretical lower-limit voltage $V_{min}$, and then decrease the lower-limit voltage in a subsequent battery cycle, so that the battery can maintain an initial discharging amount in one discharging process when the battery capacity attenuates, thereby alleviating a feeling of a user on attenuation of the battery capacity and improving use experience of the user.

**Table 8**

|  | First cycle interval | Second cycle interval | Third cycle interval | Fourth cycle interval | ... |
|---|---|---|---|---|---|
| Quantity of cycles | 1 to 200 | 201 to 400 | 401 to 600 | >600 | ... |
| Lower-limit voltage | $V_Y$ | $V_Y$-100 mV | $V_Y$-200 mV | $V_Y$-300 mV | ... |

For example, initially, the electronic device 10 may set the lower-limit voltage of the battery to $V_Y$, where $V_Y > V_{min}$, for example, $V_Y$=3.5 V; and set the upper-limit voltage to $V_{max}$. For example, $V_{max}$=4.45 V At the first cycle interval, the battery is charged and discharged based on $V_Y$=3.5 V and $V_{max}$=4.45 V

When the battery begins a 201st battery cycle, the electronic device 10 may decrease the lower-limit voltage of the battery. For example, the electronic device 10 may decrease the lower-limit voltage of the battery $V_Y$ to 3.4 V Thereafter, at the second cycle interval, the battery is charged and discharged based on 3.4 V and $V_{max}$=4.45 V Based on the initially set lower-limit voltage, the electronic device 10 may continuously decrease the lower-limit voltage of the battery by analogy as the battery cycle passes, until the lower-limit voltage reaches the theoretical lower-limit voltage $V_{min}$.

FIG. 4 is a schematic diagram of an effect that is of extending a battery life and that corresponds to the charging and discharging management method corresponding to Table 8 according to an embodiment of this application. $C_0$ represents an initial battery capacity, $C_{min}$ represents a lowest value that is of the capacity and that is for maintaining normal work of the battery, and a slope represents an attenuation speed of the battery capacity. In a case of fully charging and full discharging, the battery capacity gradually decreases as a material of a negative electrode is lost, and a quantity of battery cycles is N. Refer to a dashed line in FIG. 4. If the charging and discharging management method shown in Table 8 is implemented, because the lower-limit voltage is initially set to a voltage higher than the theoretical lower-limit voltage, a current actual battery capacity $C_1$ is lower than $C_0$. However, because the lower-limit voltage is set to the voltage higher than the theoretical lower-limit voltage, in this case, a charging/discharging volume change rate of the battery is less than a charging/discharging volume change rate in the case of fully charging and full discharging. When the quantity of cycles reaches $n_0$, the electronic device 10 increases the lower-limit voltage, so that the battery capacity is expanded based on original attenuation. In this way, for a user, the battery may maintain the initial discharging amount in one discharging process as much as possible, thereby alleviating the feeling of the user on attenuation of the battery capacity and improving the use experience of the user. In addition, according to the method shown in Table 8, a cycle life of the battery may be extended to N+N3.

Refer to the method shown in Table 2. In the embodiment (Table 8) in which the lower-limit voltage is decreased, the electronic device 10 may alternatively decrease the lower-limit voltage of the battery each time a new battery cycle begins. Refer to the method shown in Table 3. In the embodiment in which the lower-limit voltage is decreased, a decrease amount by which the electronic device 10 decreases the lower-limit voltage each time may also be different. Refer to the method shown in Table 5. The electronic device 10 may determine the decrease amount based on a capacity loss. Refer to the method shown in Table 6. The electronic device 10 may alternatively determine the decrease amount and the like based on a current capacity retention rate of the battery, and details are not described herein.

In the foregoing embodiment, a moment at which the electronic device 10 sets $V_Y$ in the 1st battery cycle may be referred to as a third moment. The electronic device 10 may set $V_Y$ at any moment before a discharging end moment of the cycle. A moment at which the electronic device 10 sets $V_Y$-100 mV in the 201st battery cycle may be referred to as a fourth moment. Correspondingly, $V_Y$ may be referred to as a fifth value, and $V_Y$-100 mV may be referred to as a sixth value. It may be understood that, a moment at which the electronic device 10 sets $V_Y$-100 mV in the 201st battery cycle may be referred to as the third moment. A moment at which the electronic device 10 sets $V_Y$-200 mV in the 401st battery cycle may be referred to as the fourth moment. Correspondingly, $V_Y$-100 mV may be referred to as the fifth value, and $V_Y$-200 mV may be referred to as the sixth value.

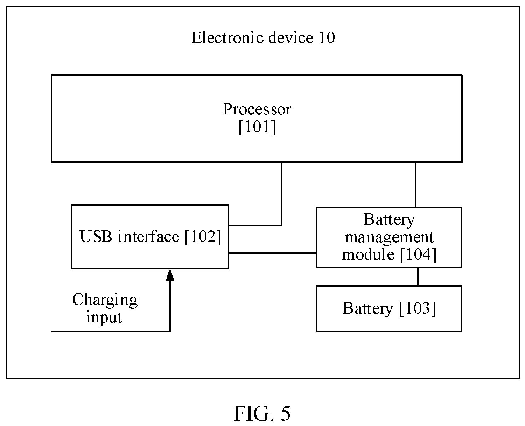

FIG. 5 is a schematic diagram of a structure of an electronic device 10 according to an embodiment of this application.

As shown in FIG. 5, the electronic device 10 includes a processor 101, a USB interface 102, a battery 103, and a battery management module 104. It may be understood that, the structure illustrated in this embodiment of this application does not constitute a specific limitation on the electronic device 10. In some other embodiments of this application, the electronic device 10 may include more or fewer components than those shown in the figure, or some components may be combined, or some components may be split, or components are arranged in different manners. The components shown in the figure may be implemented by hardware, software, or a combination thereof.

The processor 101 may include one or more processing units. For example, the processor 101 may include an application processor (application processor, AP), a modem processor, a graphics processing unit (graphics processing unit, GPU), an image signal processor (image signal processor, ISP), a controller, and a digital signal processor (digital signal processor, DSP), and a baseband processor. Different processing units may be independent devices, or may be integrated into one or more processors. The controller may generate an operation control signal based on instruction operation code and a timing signal, to complete control of instruction fetching and instruction execution. A memory may be further disposed in the processor 101 for storing instructions and data.

The USB interface 102 is an interface that conforms to a USB standard specification, and may be specifically a mini USB interface, a micro USB interface, a USB Type C interface, or the like. The USB interface 102 may be configured to be connected to a charger to charge the electronic device 10, or may be used for data transmission between the electronic device 10 and a peripheral device.

It may be understood that, an interface connection relationship between modules illustrated in this embodiment of this application is merely an example for description, and does not constitute a limitation on a structure of the electronic device 10. In some other embodiments of this application, the electronic device 10 may alternatively use an interface connection manner different from that in the foregoing embodiment, or use a combination of a plurality of interface connection manners.

A material of a negative electrode of the battery 103 is a material that has a significant volume effect such as silicon, tin (Sn), and germanium, and a mixed negative electrode including the material and graphite. For example, the battery 103 may be a silicon-anode (graphite-silicon doped) lithium battery. The battery 103 may supply power to another module of the electronic device 10, such as a processor, to maintain normal work of the electronic device 10. After stored electrical energy of the battery 103 is completely consumed, the battery 103 may receive charging input from the charger through the USB interface 102, to store electrical energy, and then continue to supply power to the electronic device 10.

The battery management module 104 is connected to the USB interface 102, the battery 103, and the processor 101. The battery management module 104 may supply power to the electronic device while charging the battery 103. The battery management module 104 is configured to receive charging input from the charger. The battery management module 104 receives input of the battery 103 to supply power to another module of the electronic device 10 such as the processor 101. The battery management module 104 may further be configured to monitor parameters such as a battery capacity, a quantity of battery cycles, and a battery health status (power leakage and impedance). In some other embodiments, the battery management module 104 may alternatively be disposed in the processor 101.

In this embodiment of this application, when monitoring the battery capacity and the quantity of battery cycles, the battery management module 104 may adjust a lower-limit voltage and/or an upper-limit voltage of the negative electrode to reduce a volume change rate of the material of the negative electrode, so as to reduce a loss to the battery, and extend a cycle life of the battery.

In this embodiment of this application, the electronic device 10 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device 10 is not specifically limited in this embodiment of this application.

As used in the specification and the claims of this application, a singular expression form, "one", "a", "said", "foregoing", "the", or "this", is intended to also include a plural expression form, unless clearly indicated to the contrary in the context. It should be further understood that, the term "and/or" used in this application indicates and includes any and all possible combinations of one or more of the listed items. As used in the foregoing embodiments, based on the context, the term "when" may be interpreted as a meaning of "if", "after", "in response to determining", or "in response to detecting". Similarly, based on the context, the phrase "when it is determined" or "if it (the described condition or event) is detected" may be interpreted as a meaning of "if it is determined", "in response to determining", "when it (the described condition or event) is detected", or "in response to detecting (the described condition or event)".

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one network site, computer, server, or data center to another network site, computer, server, or data center in a wired (such as a coaxial cable, an optical fiber, or a digital subscriber line) or wireless (such as infrared, wireless, or microwave) manner. The computer-readable storage medium may be any available medium accessible by the computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures in the methods in the foregoing embodiments may be implemented by using a computer program instructing related hardware. The program may be stored in a computer-readable storage medium. When the program is executed, the procedures in the foregoing method embodiments may be performed. The foregoing storage medium includes any medium that can store program code, such as an ROM, a random access memory (RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A charging and discharging management method, applied to an electronic device, wherein the electronic device comprises a battery, and the method comprises:

   setting a lower-limit voltage of the battery to a first value at a first moment, wherein when a voltage of the battery reaches the first value, the battery stops being discharged; and
   setting the lower-limit voltage of the battery to a second value at a second moment, wherein the second moment is later than the first moment, the second value is greater than the first value, and when the voltage of the battery reaches the second value, the battery stops being discharged.

2. The method according to claim 1, wherein the first moment corresponds to a first battery cycle of the battery, the second moment corresponds to a second battery cycle of the battery, and the first battery cycle and the second battery cycle are different cycles.

3. The method according to claim 2, wherein the second battery cycle is a next cycle of the first battery cycle.

4. The method according to claim 2, wherein a first quantity of battery cycles exists between the second battery cycle and the first battery cycle.

5. The method according to claim 4, wherein a voltage difference between the second value and the first value corresponds to a first proportion of a battery capacity.

6. The method according to claim 2, wherein a capacity retention rate of the battery is a third value in the first battery cycle, the capacity retention rate of the battery is a fourth value in the second battery cycle, the capacity retention rate is a ratio of a current total charging amount to an initial total charging amount of the battery, and the third value is different from the fourth value.

7. The method according to claim 1, wherein a first voltage value is preset for the battery, the first voltage value is a minimum value of the lower-limit voltage of the battery, and the first value is greater than or equal to the first voltage value.

8. The method according to claim 1, wherein a second voltage value is preset for the battery, the second voltage value is a maximum value of the lower-limit voltage of the battery, and the second value is less than or equal to the second voltage value.

9. The method according to claim 1, wherein a material of a negative electrode of the battery comprises one or more of the following: carbon, silicon, tin, and germanium.

10. A charging and discharging management method, applied to an electronic device, wherein the electronic device comprises a battery, and the method comprises:

    setting a lower-limit voltage of the battery to a fifth value at a third moment, wherein when a voltage of the battery reaches the fifth value, the battery stops being discharged; and
    setting the lower-limit voltage of the battery to a sixth value at a fourth moment, wherein the fourth moment is later than the third moment, the sixth value is less than the fifth value, and when the voltage of the battery reaches the sixth value, the battery stops being discharged.

11. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 9 or claim 10 is performed.

12. A chip system, applied to an electronic device, wherein the chip system comprises one or more processors, and the processors are configured to invoke computer instructions to enable the electronic device to perform the method according to any one of claims 1 to 9 or claim 10.

13. A computer-readable storage medium, comprising instructions, wherein when the instructions are run on an electronic device, the method according to any one of claims 1 to 9 or claim 10 is performed.

FIG. 1

S101 — Determine a current quantity of cycles of a battery

S102 — When the current quantity of cycles of the battery is from 1 to $n_0$, set a lower-limit voltage to $V_{min}$, and set an upper-limit voltage to $V_{max}$

S103 — When the current quantity of cycles of the battery is from $n_0+1$ to $n_1$, increase the lower-limit voltage to $V_{min}+V_0$, and maintain the upper-limit voltage at $V_{max}$

S104 — When the current quantity of cycles of the battery is from $n_1+1$ to $n_2$, increase the lower-limit voltage to $V_{min}+V_0+V_1$, and maintain the upper-limit voltage at $V_{max}$

S105 — Sequentially increase the lower-limit voltage by analogy as the quantity of cycles increases

FIG. 2

FIG. 3A

FIG. 3B

FIG. 4

Electronic device 10

Processor
[101]

USB interface [102]

Charging
input

Battery
management
module [104]

Battery [103]

FIG. 5

## INTERNATIONAL SEARCH REPORT

| International application No. |
| --- |
| **PCT/CN2023/088874** |

| A. | CLASSIFICATION OF SUBJECT MATTER |
| --- | --- |
| | H02J7/00(2006.01)i;  H01M10/42(2006.01)i |

According to International Patent Classification (IPC) or to both national classification and IPC

| B. | FIELDS SEARCHED |
| --- | --- |

Minimum documentation searched (classification system followed by classification symbols)

IPC:  H02J H01M

Documentation searched other than minimum documentation to the extent that such documents are included in the fields searched

Electronic data base consulted during the international search (name of data base and, where practicable, search terms used)

VEN, CNTXT, CNABS, WOTXT, EPTXT, USTXT, CNKI, IEEE: 放电, 循环, 周期, 电池, 下限电压, 截止电压, 容量, discharge, battery, voltage, value, stop, off, cycle

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114759641 A (POWERAMP TECHNOLOGY LIMITED) 15 July 2022 (2022-07-15) <br> description, paragraphs 0048-0109, and figures 1-6 | 1-9, 11-13 |
| X | CN 114784401 A (INSTITUTE OF CHEMISTRY, CHINESE ACADEMY OF SCIENCES) 22 July 2022 (2022-07-22) <br> description, paragraphs 0007-0060, and figures 1-2 | 10-13 |
| X | CN 114487840 A (BEIJING XIAOMI MOBILE SOFTWARE CO., LTD.) 13 May 2022 (2022-05-13) <br> description, paragraphs 0050-0107, and figures 1-7 | 1-9, 11-13 |
| X | CN 114744301 A (LISHEN QINGDAO NEW ENERGY CO., LTD.) 12 July 2022 (2022-07-12) <br> description, paragraphs 0038-0148, and figure 1 | 10 |
| A | CN 109616705 A (SHANGHAI UNIVERSITY) 12 April 2019 (2019-04-12) <br> entire document | 1-13 |
| A | CN 104319422 A (CHERY AUTOMOBILE CO., LTD.) 28 January 2015 (2015-01-28) <br> entire document | 1-13 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 May 2023** | **24 May 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/088874** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2008265841 A1 (KIM, Cheonsoo) 30 October 2008 (2008-10-30)<br>    entire document | 1-13 |

Form PCT/ISA/210 (second sheet) (July 2022)

**INTERNATIONAL SEARCH REPORT**
Information on patent family members

International application No.

**PCT/CN2023/088874**

| Patent document cited in search report | | | Publication date (day/month/year) | Patent family member(s) | | | Publication date (day/month/year) |
|---|---|---|---|---|---|---|---|
| CN | 114759641 | A | 15 July 2022 | None | | | |
| CN | 114784401 | A | 22 July 2022 | None | | | |
| CN | 114487840 | A | 13 May 2022 | None | | | |
| CN | 114744301 | A | 12 July 2022 | None | | | |
| CN | 109616705 | A | 12 April 2019 | None | | | |
| CN | 104319422 | A | 28 January 2015 | None | | | |
| US | 2008265841 | A1 | 30 October 2008 | KR | 20080096953 | A | 04 November 2008 |
| | | | | CN | 101299059 | A | 05 November 2008 |
| | | | | JP | 2008275581 | A | 13 November 2008 |
| | | | | KR | 903489 | B1 | 18 June 2009 |
| | | | | CN | 101299059 | B | 15 June 2011 |

**EP 4 468 556 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211014128